# EUROPÄISCHE PATENTANMELDUNG

(11) **EP 0 945 063 A1**
(43) Veröffentlichungstag der Anmeldung: **29.09.1999**
(21) Anmeldenummer: 99105643.3
(22) Anmeldetag: 19.03.1999
(51) Int. Cl.: A01N 37/16

(54) **Verfahren zum Bekämpfen und Abtöten von pathogenen Kleinlebewesen, insbesondere Insekten und Würmer**

(30) Priorität: 23.03.1998 DE 19812590
(71) Anmelder: Degussa-Hüls Aktiengesellschaft, 60287 Frankfurt am Main (DE)
(72) Erfinder: Fuchs, Rainer Dr., 63776 Mömbris (DE); Huss, Michael, 65760 Eschborn (DE)

(57) **Zusammenfassung**

Human-, tier- und pflanzenpathogene Kleinlebewesen aus der Reihe der Insekten und Würmer lassen sich wirksam bekämpfen durch Auf- oder Einbringen einer wäßrigen Percarbonsäurelösung, enthaltend eine oder mehrere Percarbonsäuren mit 1 bis 6 C-Atomen, auf Oberflächen und/oder in Gewässer. Bevorzugt wird eine Peressigsäure und/oder Perameisensäure enthaltende Lösung verwendet. Bei Insekten werden die Larven derselben in Gewässern bekämpft, mit einer Anwendungskonzentration von 1 bis 5000 ppm Percarbonsäure.

## Beschreibung

Die Erfindung richtet sich auf ein Verfahren zum Bekämpfen und Abtöten von pathogenen Kleinlebewesen, insbesondere Insekten und Würmer.

Seit Menschengedenken werden Menschen und Tiere sowie Pflanzen von diversen pathogenen Kleinlebewesen aus der Reihe der Insekten und Würmer geplagt beziehungsweise geschädigt; beispielhaft zu nennen sind Stechmücken, wie die Malaria übertragenden Anopheles-Mücken, und die Bilharziose verursachenden Larven von Schistosomen (Saugwürmer).

Es hat nicht an Versuchen gefehlt, die Malaria auszurotten. So wurde früher zur Bekämpfung der Mücken das Insektizid DDT in großen Mengen versprüht. Der guten Wirkung stand aber eine Schädigung des ökologischen Gleichgewichts entgegen, so daß die Verwendung von DDT verboten wurde.

Versucht wurde auch die Verwendung von chlorabspaltenden Mitteln, wie Natriumhypochlorit. Auch diese Mittel konnten sich nicht durchsetzen, da die Handhabung problematisch ist und es bei der Anwendung in Binnengewässern zwangsweise zu einer unerwünschten Aufsalzung und Bildung unerwünschter chlororganischer Verbindungen kommt. In tropischen und subtropischen Ländern wurde auch versucht, durch Verwendung von Tensiden die Oberflächenspannung von Gewässern zu erniedrigen, um hierdurch ein Halten der Mückenlarven unter der Wasseroberfläche zu verhindern.

Nachteilig an dieser Technik und damit für einen nur begrenzten Einsatz verantwortlich war, daß die Mücken dem Ausbreitungsbereich der Tenside teilweise entkommen konnten und/oder zu große Einsatzmengen an Tensiden erforderlich waren.

Aus dem US-Patent 5,393,781 ist bekannt, Zebramuscheln in Kühlkreisläufen durch den Einsatz einer Peressigsäurelösung zu bekämpfen. Dieses Dokument nennt keine andere Tierklassen, die sich mit Peressigsäure bekämpfen lassen. Der Einsatz von Peressigsäure als Mikrobiozid zum Bekämpfen von Bakterien, Viren, Hefen, Algen und Pilzen ist schon länger bekannt.

Aufgabe der Erfindung ist, ein Verfahren zum Bekämpfen und Abtöten von krankheitserregenden und/oder lästigen Insekten aufzuzeigen, dem die Nachteile der bisher verwendeten Mittel nicht mehr oder in geringerem Umfang anhaften.

Die Aufgabe wird gelöst durch ein Verfahren zum Bekämpfen und Abtöten von human-, tier- und pflanzenpathogenen Kleinlebewesen aus der Reihe der Insekten und Würmer, durch Auf- oder Einbringen eines flüssigen Bekämpfungsmittels auf Oberflächen und/oder in Gewässer, das dadurch gekennzeichnet ist, daß man als Bekämpfungsmittel eine wäßrige Percarbonsäurelösung, enthaltend eine oder mehrere Percarbonsäuren mit 1 bis 6 C-Atomen, verwendet.

Die Unteransprüche richten sich auf bevorzugte Ausführungsarten.

Bei den zu bekämpfenden Kleinlebewesen, unter 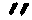 Bekämpfen" wird eine Reduzierung der Population verstanden, handelt es sich um human- und tierpathogene Kleinlebewesen aus den Klassen der Insekten und Würmer. Das erfindungsgemäße Verfahren richtet sich in besonderer Weise auf die Bekämpfung pathogener Insekten, indem deren Larven in deren bevorzugtem Lebensbereich abgetötet werden. Der bevorzugte Lebensbereich der Larven ist ein feuchtes Medium, insbesondere im wesentlichen stehende, flache Gewässer, wie die Ufernähe von Seen, Tümpeln, Reisfeldern, Sümpfen und dergleichen. In analoger Weise lassen sich pathogene Würmer bekämpfen, wobei auch hier der Anwendung in flachen Gewässern besondere Bedeutung zukommt. Beispiele von in tropischen und subtropischen Regionen vorkommenden und erfindungsgemäß zu bekämpfenden Insekten sind Stechmücken, Fliegen und Wanzen, die beim Stich oder Kontakt Einzeller, Fadenwürmer und Viren übertragen und dadurch schwerwiegende Krankheiten verursachen können, sind: Die Anopheles-Mücke bringt beim Stich Plasmodien ein, die zu Malaria führen und die Phlebotomen-Mücken die Kala-Azar-Hautkrankheit verursachenden Leishmanien; die Tse-Tse-Fliege überträgt Tryponosomen, die Erreger der Schlafkrankheit; gewisse Moskitos übertragen das Denguefieber verursachende Viren; andere Moskitos übertragen die Erreger des Gelbfiebers; schließlich sind die insbesondere im Bereich von Reisfeldern vorkommenden Mücken zu nennen, die die japanische Encephalitis verursachen.

Unter den zu bekämpfenden pathogenen Würmern stehen die Bilharziose verursachenden Schistosomen (Saugwürmer, Egel) im Vordergrund des Interesses. Die Infektion erfolgt durch den Kontakt des Menschen mit Süß- und Brackwasser, in welchen sich die Schistosomenlarven befinden. Zur Bekämpfung der Larven ist es zweckmäßig, flache stehende Gewässer, insbesondere den Uferbereich derselben, mit einer Percarbonsäurelösung zu behandeln. Auch im Wasser lebende fischpathogene Band- und Fadenwürmer können analog bekämpft werden.

Zur Bekämpfung der Larven von beispielsweise in der Nähe der Bodenoberfläche lebenden Würmern, wie Hakenwürmern, die durch Kontakt mit der Haut zur Ankylostomiasis führen können, kann die Percarbonsäurelösung in wirksamer Konzentration auf den Boden aufgebracht werden.

Die wirksame Konzentration an Percarbonsäure(n) in dem zu behandelnden Medium liegt üblicherweise im Bereich von 1 bis 5000 ppm, insbesondere im Bereich von 10 bis 500 ppm. Die Behandlung von Oberflächen - Boden oder Gewässeroberflächen - läßt sich mittels in der Landwirtschaft üblicher Sprühvorrichtungen bewirken, etwa Sprühkanonen, Fahrzeugen mit Sprühdüsen bestückten breiten Auslegern. Zur Behandlung von oberflächennahen Schichten von Gewässern kann die Percarbonsäurelösung auch direkt in das Wasser eingebracht und mittels geeigneter Mischvorrichtungen, wie Pumpen oder Schiffsschrauben, verteilt werden.

Bei den zu verwendenden Percarbonsäuren, die auch als Peroxycarbonsäuren bezeichnet werden, kann es sich um Monoperoxy-C₁ bis C₆-monocarbonsäuren, Monoperoxy- oder Diperoxy-C₄- bis C₆-dicarbonsäuren oder um Monoperoxyhydroxycarbonsäuren mit 2 bis 6 C-Atomen und 1 oder 2 Hydroxylgruppen handeln. Beispiele sind Perameisensäure, Peressigsäure, Perpropionsäure, Mono- und Diperoxybernsteinsäure, Mono- und Diperoxyglutarsäure, Peroxymilchsäure, Peroxyglykolsäure und Peroxyweinsäure. Bevorzugt werden Peressigsäure, Perameisensäure sowie Peressigsäure und Perameisensäure enthaltende Lösungen.

Im allgemeinen enthalten die Lösungen herstellungsbedingt Wasserstoffperoxid sowie die der/den Percarbonsäure(n) zugrundeliegende(n) Carbonsäure(n). Zudem enthalten die Lösungen meistens einen Mineralsäurekatalysator, der die Einstellung des Gleichgewichts beschleunigt. Die höchste Persäurekonzentration, die bei der Umsetzung von Wasserstoffperoxid mit einer Carbonsäure in wäßriger Phase bei einem gewählten Mengenverhältnis der Reaktionspartner erreichbar ist, ist die Gleichgewichtskonzentration. Demgemäß werden Lösungen im oder nahe am Gleichgewichtszustand oder hieraus vor Gebrauch durch Verdünnen mit Wasser erhaltene verdünnte Lösungen verwendet. Die zu verwendenden unverdünnten Lösungen enthalten pro l zweckmäßigerweise etwa 0,1 bis etwa 5 Mol, insbesondere 0,2 bis 2 Mol, Percarbonsäure.

Gemäß einer bevorzugten Ausführungsform wird eine Percarbonsäurelösung verwendet, die herstellungsbedingt Orthophosphorsäure, Pyrophosphorsäure oder/und Polyphosphorsaure der Formel Hₙ₊₂PₙO₃ₙ₊₁, wobei n für ein ganze Zahl von 3 oder größer 3, insbesondere 3 bis 10, steht, enthält. Die Konzentration an derartigen Phosphorsäuren liegt meist im Bereich von etwa 0,1 bis etwa 3 Gew.-%, insbesondere etwa 0,5 bis etwa 1 Gew.-%. Bevorzugt enthalten derartige Lösungen als Percarbonsäure Peressigsäure oder Perameisensäure oder beide Carbonsäuren, wobei diese Kombination bevorzugt vor Gebrauch in situ gebildet worden ist, beispielsweise durch Mischen einer Peressigsäurelösung und einer Quelle für Ameisensäure, wie Ameisensäure oder einem wasserlöslichen Formiat, und Stehenlassen für einige Minuten bis zu einigen Stunden.

Ein Vorteil derartiger Lösungen ist darin zu sehen, daß die Phosphorsäurekomponente beim Einbringen der Percarbonsäurelösung in das zu behandelnde Medium, wie insbesondere Gewässer, aus ökologischer Sicht vorteilhafter ist gegenüber der üblicherweise eingesetzten Schwefelsäure. Ein Vorteil, der allen Percarbonsäurelösungen zukommt, die eine Kombination aus Peressigsäure und Perameisensäure enthalten, ist die erhöhte Wirksamkeit im Vergleich zu Lösungen, die als Percarbonsäure nur Peressigsäure enthalten. Lösungen mit den beiden genannten Percarbonsäuren sind auch gegenüber jenen Lösungen vorteilhaft, welche als Percarbonsäuren ausschließlich Perameisensäure enthalten, weil die Herstellung letzterer aus Sicherheits- und Handhabungsgründen nicht unproblematisch ist.

Gemäß einer weiteren Ausführungsform kann die zu verwendende Percarbonsäurelösung zusätzlich ein oder mehrere Tenside enthalten. Bevorzugt werden biologisch gut abbaubare Tenside, wie sie bereits zur Bekämpfung von Insekten verwendet werden. Es handelt sich insbesondere um anionische und nichtionische Tenside, wie beispielsweise Zuckertenside, Alkanolsulfate, ethoxylierte Alkohole. Die Tensid-Konzentration in der zu versprühenden oder direkt in ein Gewässer einzubringende Percarbonsäurelösung wird derart gewählt, daß daraus eine über die Wirkung der Percarbonsäure(n) hinausgehende Wirkung erzielt wird - eine solche Wirkung kann bei einer Konzentration im Bereich von etwa 0,1 Gew.-% bis etwa 10 Gew.-% liegen.

Die erfindungsgemäße Verwendung von einer oder mehrerer Percarbonsäuren enthaltenden Lösungen und das Verfahren zur Anwendung derselben unterscheidet sich von der bekannten Verwendung solcher Lösungen zur Bekämpfung von Mikroorganismen und Zebramuscheln durch den Zweck, nämlich die Bekämpfung pathogener Insekten und Würmer. Die neue Verwendung gestattet es, die pathogenen Insekten und Würmer in wirksamer und technisch einfacher Weise zu bekämpfen, indem die Larven getötet werden. Das zu verwendende Mittel wird, nachdem die Percarbonsäure wirksam werden konnte, rasch biologisch abgebaut, so daß ökologische Probleme nicht zu befürchten sind. Es ist allerdings bei der Auswahl der Konzentration an Percarbonsäure(n) und Wasserstoffperoxid in einer auf Pflanzen aufzusprühenden Lösung zu beachten, daß höhere Konzentrationen auch phytopathogen sein können.

Die Erfindung wird anhand der nachfolgenden Beispiele verdeutlicht.

### Beispiel 1

Bekämpfung von schwarzen Stechmückenlarven: Das Wasser, in welchem sich 10 Larven befanden, wurde mittels einer Gleichgewichts-Peressigsäurelösung mit einem Gehalt von 5 Gew.-% Peressigsäure (PES) und 27 Gew.-% Wasserstoffperoxid mit 50 ppm PES angeimpft. Innerhalb von 12 Stunden nach dem Animpfen starben 5 Larven; die übrigen Tiere zeigten Symtome, die für schmerzhafte Reaktionen am Kiemenrohr sprachen (Krümmen und unruhiges Hinundherschwimmen).

### Beispiel 2

Wasser mit 10 Larven der schwarzen Stechmücke wurde mittels einer Gleichgewichts-Peressigsäurelösung mit einem Gehalt von 5 Gew.-% Peressigsäure und 27 Gew.-% Wasserstoffperoxid und zusätzlich 3 Gew.-% Hostapur S30 (30 %ige wäßrige Lösung eines Gemischs verschiedener sekundärer Alkansulfonate der Firma Hoechst AG) mit 50 ppm PES angeimpft. Innerhalb von 12 Stunden nach dem Animpfen starben 6 Larven. Auch hier zeigten die nicht-getöteten Larven die in Beispiel 1 gezeigten Schädigungssymptome.

### Vergleichsbeispiel 1

Das Wasser einer gleichen Population schwarzer Stechmückenlarven wie in den Beispielen 1 und 2 wurde mittels einer 50 gew.-%igen Wasserstoffperoxidlösung mit 1500 ppm H₂O₂ angeimpft. Keine der Larven wurde abgetötet.

### Beispiel 3

Bekämpfung von Eintagsfliegenlarven: Das Wasser mit 10 Larven wurde mittels einer Gleichgewichts-Peressigsäure mit einem Gehalt von 5 Gew.-% Peressigsäure und 27 Gew.-% Wasserstoffperoxid mit 7 ppm PES angeimpft. Alle Larven starben nach 8 Stunden.

### Beispiel 4

Bekämpfung des roten Schlammwurms (Tubificeten): Das Wasser, in dem sich die Versuchstiere befanden, wurde mittels einer Gleichgewichts-Peressigsäurelösung mit einem Gehalt von 2 Gew.-% Peressigsäure und 48 Gew.-% Wasserstoffperoxid mit 30 ppm PES angeimpft. Alle Tiere starben.

### Vergleichsbeispiel 2

Analog Beispiel 4 wurde das rote Schlammwürmer enthaltende Wasser mit 800 ppm einer 50 gew.-%igen Wasserstoffperoxidlösung angeimpft. Keines der Versuchstiere starb.

### Beispiel 5

Eine Population der roten Zuckmückenlarve (Chironimiden) wurde nach Animpfung mit 400 ppm der 5 gew.-%igen Gleichgewichts-Peressigsäurelösung (5 Gew.-% PES, 27 % H₂O₂) angeimpft. Alle Larven wurden innerhalb von 2 Stunden abgetötet.

## Patentansprüche

1. Verfahren zum Bekämpfen und Abtöten von human-, tier- und pflanzenpathogenen Kleinlebewesen aus der Reihe der Insekten und Würmer, durch Auf- oder Einbringen eines flüssigen Bekämpfungsmittels auf Oberflächen und/oder in Gewässer,
dadurch gekennzeichnet,
daß man als Bekämpfungsmittel eine wäßrige Percarbonsäurelösung, enthaltend eine oder mehrere Percarbonsäuren mit 1 bis 6 C-Atomen, verwendet.

2. Verfahren nach Anspruch 1,
dadurch gekennzeichnet,
daß man eine Peressigsäure und/oder Perameisensäure enthaltende Lösung verwendet.

3. Verfahren nach Anspruch 2,
dadurch gekennzeichnet,
daß man eine die Percarbonsäure(n), die zugrundeliegende Carbonsäure(n) und Wasserstoffperoxid enthaltende wäßrige Lösung, insbesondere eine wäßrige Percarbonsäurelösung am oder nahe am Gleichgewicht oder eine hieraus vor Gebrauch hergestellte verdünnte Lösung, verwendet.

4. Verfahren nach einem der Ansprüche 1 bis 3,
dadurch gekennzeichnet,
daß die zu verwendende Percarbonsäurelösung pro l 0,1 bis 5 Mol, insbesondere 0,2 bis 2 Mol, Percarbonsäure(n) enthält.

5. Verfahren nach einem der Ansprüche 1 bis 4,
dadurch gekennzeichnet,
daß die zu verwendende Percarbonsäurelösung eine Mineralsäure aus der Reihe Orthophosphorsäure, Pyrophosphorsäure und Polyphosphorsäure der Formel Hₙ₊₂PₙO₃ₙ₊₁, wobei n für eine ganze Zahl von 3 oder größer 3 steht, enthält, insbesondere in einer Menge von 0,1 bis 3 Gew.-%.

6. Verfahren nach einem der Ansprüche 1 bis 5,
dadurch gekennzeichnet,
daß die Percarbonsäurelösung zusätzlich ein oder mehrere Tenside enthält.

7. Verfahren nach Anspruch 6,
dadurch gekennzeichnet,
daß die Percarbonsäurelösung 0,1 bis 10 Gew.-% Tenside, insbesondere Tenside aus der Reihe biologisch gut abbaubarer, anionischer und nichtionischer Tenside, enthält.

8. Verfahren nach einem der Ansprüche 1 bis 7,
dadurch gekennzeichnet,
daß man zum Bekämpfen von Insekten deren Larven abtötet, indem man die Percarbonsäurelösung auf die Oberfläche eines die Larven enthaltenden Gewässers aufsprüht oder sie in das Gewässer einbringt und oberflächennah verteilt.

9. Verfahren nach einem der Ansprüche 1 bis 8,
dadurch gekennzeichnet,
daß man auf oder in ein die pathogenen Kleinlebewesen enthaltendes Medium, insbesondere Gewässer, die Percarbonsäurelösung in einer solchen Menge aufsprüht oder einbringt, daß die Konzentration an Percarbonsäure im bevorzugten Lebensbereich der Kleinlebewesen 1 bis 5000 ppm, insbesondere 10 bis 500 ppm, beträgt.
